# FASCICULE DE BREVET EUROPEEN

(11) **EP 2 222 971 B1**
(45) Date de publication et mention de la délivrance du brevet: **30.03.2011**
(21) Numéro de dépôt: 08844963.2
(22) Date de dépôt: 28.10.2008
(51) Int. Cl.: F16C 11/06, B62D 7/16

(54) **ARTICULATION A ROTULE A DEBATTEMENT LIMITE**
KUGELGELENK MIT BEGRENZTER DURCHBIEGUNG
LIMITED-DEFLECTION BALL JOINT

(30) Priorité: 30.10.2007 FR 0758698
(43) Date de publication de la demande: 01.09.2010
(73) Titulaire: Scoma, 28240 La Loupe (FR)
(72) Inventeur: RÉDÉLÉ, Jean-Charles, F-92300 Neuilly Sur Seine (FR)
(74) Mandataire: CAPRI
(86) Numéro de dépôt international: PCT/FR2008/051944
(87) Numéro de publication internationale: WO 2009/056760

(56) Documents cités:
- EP-A- 1 077 334
- DE-A1- 4 412 597
- FR-A- 1 247 237
- US-A- 3 290 074

## Description

La présente invention concerne une articulation à rotule, notamment pour barre ou bielle de direction, barre d'accouplement, biellette stabilisatrice de suspension, etc. De telles articulations à rotule sont fréquemment utilisées dans des véhicules automobiles, tels que des voitures, des camions, des tracteurs, etc. Il existe encore d'autres applications pour de telles articulations à rotule.

De manière générale, une articulation à rotule comprend un boîtier formant un logement, une ouverture, un coussinet inférieur et un coussinet supérieur. D'autre part, l'articulation à rotule comprend une rotule formant une tête, un col et une tige, la tige s'étendant hors du boîtier à travers son ouverture, la tête étant reçue dans le logement du boîtier entre les coussinets inférieur et supérieur de telle sorte que la tête peut se déplacer dans le logement. Il s'agit là d'une structure commune à la plupart des articulations à rotule. Durant son fonctionnement, la tige de la rotule peut se déplacer par rapport au boîtier avec un débattement limité. Ceci est rendu possible du fait que la tête de la rotule peut se déplacer à l'intérieur du logement du boîtier en coulissant sur les coussinets prévus à cet effet. La tige de rotule peut ainsi se déplacer selon deux axes perpendiculaires. Le débattement de la tige selon ces deux axes est limité par la configuration de l'ouverture du logement dont le bord pénètre généralement dans le col de la rotule situé entre la tête et la tige. Il s'agit là encore d'une configuration tout à fait classique pour une articulation à rotule. Ainsi, en configurant l'ouverture du boîtier de manière appropriée, il est possible de limiter de manière différenciée le débattement de la tige selon les deux axes perpendiculaires. On peut par exemple limiter le débattement de la tige selon un axe à 90° et limiter le débattement de la tige selon l'autre axe perpendiculaire à 30°. Une limitation différenciée des débattements de la tige est choisie en fonction de l'application de l'articulation à rotule.

Le document FR-1 247 237 décrit une articulation à rotule comprenant toutes les caractéristiques du préambule de la revendication 1.

Dans certains cas, il est même souhaité que le débattement de la tige de rotule ne s'effectue principalement que selon un seul axe, le débattement étant pratiquement nul selon l'axe perpendiculaire. Il existe déjà dans l'art antérieur des systèmes de limitation de débattement prévus au niveau de la tête de rotule, mais ceux-ci sont peu fiables et coûteux à la mise en oeuvre.

La présente invention a pour but de remédier à l'inconvénient précité de l'art antérieur en définissant une articulation à rotule dont le débattement de la tige de rotule peut être limité, voire pratiquement bloqué, sans pour autant réduire la fiabilité de l'articulation à rotule ni son coût.

Pour atteindre ce but, la présente invention propose une articulation à rotule, notamment pour barre de direction ou d'accouplement, comprenant un boîtier formant un logement, une ouverture, un coussinet inférieur et un coussinet supérieur, une rotule formant une tête, un col et une tige, le col définissant un étranglement de section réduite entre la tête et la tige, la tige s'étendant hors du boîtier à travers son ouverture définissant un bord, la tête étant reçue dans le logement entre les coussinets inférieur et supérieur, de telle sorte que la tête peut se déplacer dans le logement, caractérisée en ce que le boîtier comprend, au niveau de son ouverture, au moins une bride d'appui destinée à venir en contact de la tige de rotule pour limiter son débattement dans cette direction cette bride se présentant sous la forme d'une extension du bord de l'ouverture s'étendant en éloignement du logement de la tête de rotule. Plutôt que de limiter le débattement de la tige au niveau de la tête ou du col, comme cela est le cas dans l'art antérieur, la présente invention limite le débattement directement au niveau de la tige en prolongeant le boîtier au niveau de son ouverture de manière à s'étendre jusqu'au niveau de la tige. Ainsi, l'appui, qui va générer la limitation de débattement, est situé en éloignement du point de rotation de la tige qui est localisé au niveau du centre de la tête. Ceci augmente d'une part la précision de la limitation de débattement et augmente la solidité de l'articulation à rotule du fait que l'appui se fait entre deux pièces très robustes, à savoir le boîtier et la tige de la rotule. L'extension ou la prolongation du boîtier permettant l'appui se présente sous la forme d'une bride dont la définition doit être prise au sens le plus large : la bride n'est rien d'autre qu'une partie du boîtier s'étendant axialement jusqu'au niveau de la tige de la rotule. Du fait de sa situation, cette bride d'appui forme une partie du bord de l'ouverture du boîtier donnant accès au logement interne recevant la tête de la rotule.

Selon une forme de réalisation avantageuse, le boîtier comprend deux brides opposées disposées de part et d'autre de la tige pour limiter le débattement de tige selon un axe. Dans certains cas d'application, les brides sont disposées de manière à limiter le débattement axial de la tige à quelques degrés, avantageusement 1 à 3 degrés, et de préférence à environ 1°30'. En pratique, il n'est pas possible de réduire le débattement axial à 0°, ce qui empêcherait la rotation de la tête à l'intérieur du logement du boîtier. C'est pourquoi il faut maintenir un débattement minimum qui peut être de l'ordre de 1°.

Selon un aspect intéressant, il faut remarquer que ladite au moins une bride est hors de contact du col, lorsqu'elle est en contact de la tige. En d'autres termes, la bride d'appui ne pénètre pas à l'intérieur du col de la rotule.

Selon un mode de réalisation pratique, la tige de rotule peut comprendre une section cylindrique, ladite au moins une bride venant en contact de cette section cylindrique. Avantageusement, la section cylindrique se raccorde directement au col, et présente un diamètre supérieur à celui du col. Dans ce cas, l'articulation peut en outre comprendre un soufflet de cardan fixé d'une part sur le boîtier autour de l'ouverture et en prise serrante d'autre part sur la partie cylindrique de la tige de rotule.

Selon un autre aspect avantageux de l'invention, ladite au moins une bride définit une partie de bord de l'ouverture qui s'étend axialement davantage vers la tige de rotule que d'autres parties de bord de l'ouverture destinées avantageusement à buter également contre la tige de rotule ou encore à pénétrer dans le col de la rotule, définissant ainsi un débattement transversal maximal de la tige. Dans l'autre direction axiale, le débattement de la tige est limité par les brides d'appui.

Selon un autre aspect avantageux de l'invention, ladite au moins une bride forme une partie de bord galbée de l'ouverture.

Selon une autre caractéristique, l'ouverture peut présenter une forme oblongue ou ovale et présente un bord d'appui de hauteur variable, les brides d'appui étant situées sur les côtés longs de l'ouverture. On comprendra que la configuration de l'ouverture, et à fortiori de son bord, est relativement complexe, d'une part car sa forme n'est pas circulaire (mais oblongue ou ovale) et d'autre part parce que son bord ne s'étend pas dans un plan (mais décrit une courbe de hauteur variable). Selon l'axe longitudinal de la tête de rotule, les brides d'appui s'étendent axialement plus bas que les autres parties de l'ouverture au niveau desquelles le débattement de rotule est maximal. On peut ainsi définir le profil du bord de l'ouverture comme étant de forme sensiblement sinusoïdale en suivant un parcours oblong ou ovale.

Selon une autre caractéristique intéressante de l'invention, les brides peuvent comprendre des faces d'appui internes qui s'étendent sensiblement parallèlement l'une de l'autre.

L'esprit de l'invention est de réaliser la limitation de débattement de la tige de rotule en éloignement du point de rotation de la tige.

L'invention sera maintenant plus amplement décrite en référence aux dessins joints donnant à titre d'exemple non limitatif un mode de réalisation de l'invention.

Sur les figures :
La figure 1 est une vue en perspective d'une articulation à rotule complète selon un mode de réalisation non limitatif de l'invention,
La figure 2 est une vue en perspective du boîtier de l'articulation à rotule de la figure 1,
La figure 3 est une vue de dessus de l'articulation à rotule de la figure 1,
La figure 4 est une vue en coupe transversale verticale selon un plan passant par la queue du boîtier de l'articulation à rotule de la figure 1, et
La figure 5 est également une vue en coupe transversale verticale, mais passant par un plan perpendiculaire à celui de la figure 4.

L'articulation à rotule représentée sur les différentes figures comprend essentiellement un boîtier 1 et une rotule 6.

Le boîtier 1 comprend un corps de boîtier 2, un couvercle 3, un coussinet supérieur 4, un ressort 34 et une queue de boîtier 5.

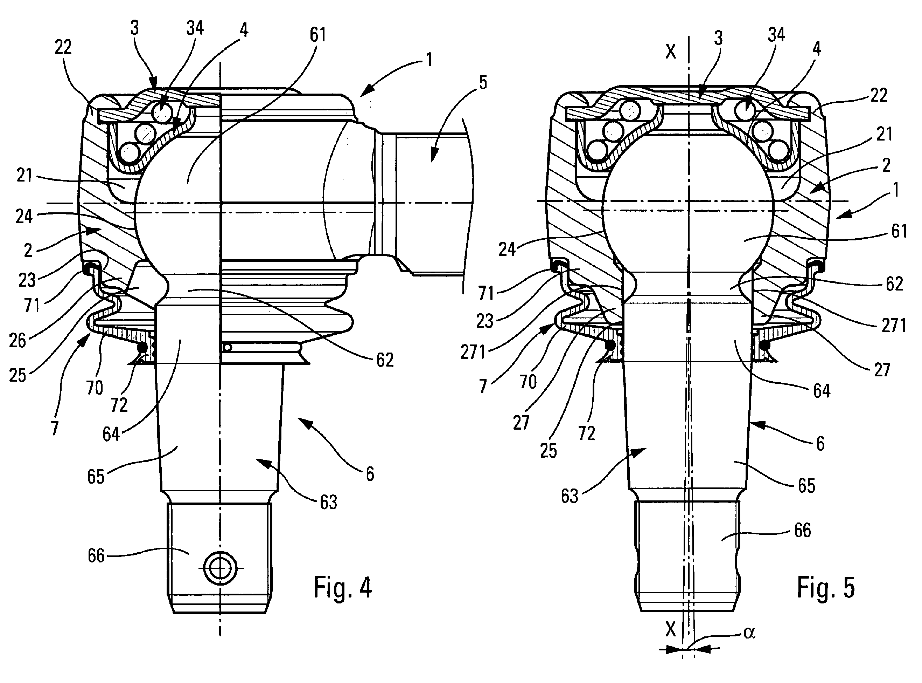

Le corps 2 peut être réalisé de manière monobloc avec la queue 5, ou en variante, de manière séparée, puis rapportée et fixée à l'aide de techniques connues en soi. Le corps 2 définit au niveau de son extrémité supérieure une rainure de réception 22 dans lequel le bord périphérique externe du couvercle 3 est engagé. Le coussinet 4 est également logé à l'intérieur du corps 2 et est repoussé en éloignement du couvercle 3 par le ressort 34. Le coussinet 4 se présente sous la forme d'une couronne annulaire définissant une ouverture centrale et une goulotte annulaire. Le ressort 34 prend appui d'une part sous le couvercle 3 et d'autre part dans le fond de la goulotte du coussinet 4. Sur les figures 4 et 5, le ressort est représenté dans son état maximal de compression : le coussinet supérieur 4 est alors en contact du couvercle 3. Le boîtier 2, le couvercle 3 et le coussinet supérieur 4 définissent ensemble un logement interne 21 qui va servir à recevoir la rotule, comme on le verra ci-après. Le corps 2 définit également un coussinet inférieur 24 qui est ici réalisé de manière monobloc par le corps 2. En variante non représenté, il est également possible de réaliser le coussinet inférieur 24 à l'aide d'une pièce rapportée à l'intérieur du corps 2. Le corps 2 définit également une ouverture 25 qui est opposée au couvercle 3. Cette ouverture 25 permet de faire communiquer le logement interne 21 avec l'extérieur. Au contraire, le couvercle 3 ferme totalement le logement 21 à son extrémité opposée à l'ouverture 25. Nous reviendrons plus tard sur la configuration particulière de l'ouverture 25 qui incorpore la présente invention.

La rotule 6 comprend une tête ou sphère de rotule 61, un col 62 et une tige de rotule 63. La tête de rotule 61 présente une configuration générale sphérique et est reçue à l'intérieur du logement 21 du boîtier 1. Plus précisément, la tête 61 est calée entre le coussinet supérieur 4 et le coussinet inférieur 24, qui présentent tous deux des surfaces de contact complémentaires partiellement sphériques. A mesure que la tête s'use par frottement entre les coussinets, le ressort 34 pousse le coussinet supérieur 4 en appui contre la tête, évitant ainsi tout jeu néfaste. La tige 63 fait saillie hors du boîtier 1 à travers l'ouverture 25 du corps 2. Le col 62, qui relie la tête 61 à la tige 63, est grossièrement situé au niveau de l'ouverture 25. La tête 61 est la partie de la rotule qui présente le diamètre maximal. Le col 62 présente un diamètre inférieur à celui de la tête. La tige 63, au niveau où elle se raccorde au col 62, présente également un diamètre supérieur à celui du col. On peut ainsi dire que le col 62 forme un étranglement de diamètre réduit entre la tête 61 et la tige 63. Dans une forme de réalisation pratique, la tige 63 comprend une partie cylindrique 64 qui se raccorde directement au col 62. Cette partie cylindrique 64 est également disposée grossièrement au niveau de l'ouverture 25 du boîtier 1. En dessous de cette partie cylindrique, la tige 63 peut comprendre une partie tronconique 65 qui peut se terminer par une autre partie cylindrique 66 qui sert de raccordement.

L'articulation à rotule comprend également un soufflet de cardan 7 qui réalise une liaison souple étanche entre l'ouverture du boîtier 1 et la tige 63 de la rotule 6. Le soufflet de cardan 7 comprend un premier collier 71 en prise autour d'un épaulement 23 formé par le corps 2 : cet épaulement 23 est situé à proximité de l'ouverture 25, et plus précisément autour de l'ouverture 25. D'autre part, le soufflet 7 comprend un second collier 72 en prise serrante autour de la tige 63 de la rotule 6, et de préférence en prise autour de la partie cylindrique 64 de la tige de rotule 63. Entre les deux colliers 71 et 72, le soufflet 7 définit une partie souple 70 qui permet le déplacement par pivotement de la tige 63 par rapport au corps 2.

L'articulation à rotule qui vient d'être décrite, est d'un type tout à fait conventionnel. La tige de rotule 63 peut être déplacée par rapport au boîtier 1 par pivotement autour de la tête 61 reçue fixement dans le logement 21 entre les coussinets supérieur 4 et inférieur 24. La tige 63 peut se déplacer selon deux axes perpendiculaires avec un débattement limité.

En se référant maintenant à la figure 4, on peut aisément comprendre que la tige 63 peut se déplacer selon un axe qui s'étend dans le plan de la figure avec un débattement relativement important, étant donné que la partie de bord 26 de l'ouverture 25 est située en éloignement de la rotule 6, et plus particulièrement de la tige 63 de la rotule. La tige 63 peut ainsi pivoter dans le plan de la feuille jusqu'à ce que la partie de bord 26 de l'ouverture vienne en appui contre la partie cylindrique 64. La tige 63 peut ainsi avoir un débattement de l'ordre de 60 à 90° par exemple.

En se référant maintenant à la figure 5, on voit que la partie de bord 27 de l'ouverture 25 est située à proximité direct de la rotule 6, et plus particulièrement de la tige de rotule 63. Le bord de l'ouverture forme deux brides d'appui opposées 27 entre lesquelles la tige de rotule 63 ne peut effectuer qu'un débattement limité α, par exemple de l'ordre de 1 à 3°, de préférence environ 1 °30'. Cela signifie que la tige 63 ne peut effectuer qu'un débattement de 65' de part et d'autre de l'axe X matérialisant le débattement nul. En effet, il n'est pas possible de disposer les brides d'appui 27 de telle manière à immobiliser parfaitement la tige de rotule 63, car il est nécessaire que la tête de rotule 61 puisse tourner à l'intérieur du logement 21 entre les coussinets supérieur et inférieur. C'est pourquoi il est toujours nécessaire de maintenir un léger débattement que l'on a ici fixé à 1 °30', car c'est avec ce débattement que les performances ont été observées comme optimales.

Les brides d'appui 27 se présentent ainsi sous la forme d'extension du bord de l'ouverture vers le bas sur les figures, c'est-à-dire en direction de la tige de rotule 63 ou encore en éloignement du couvercle 3. Les brides d'appui 27 sont de préférence réalisées de manière monobloc avec le corps 2. Elles s'étendent jusqu'au niveau de la partie cylindrique 64 de la tige de rotule 63. Les brides d'appui 27 présentent de préférence des faces internes d'appui 271 qui s'étendent parallèlement l'une à l'autre selon l'axe X. Ainsi, la partie cylindrique 64 peut venir en contact franc avec les faces internes 271 en générant une zone de contact étendue linéaire, et non pas simplement ponctuelle.

On peut remarquer que le contact réalisé entre la tige 63 et les brides d'appui 27 est situé à une certaine distance du centre de la sphère 61 qui est le point de rotation de la tige. L'effet de levier est donc réduit, de sorte que la force exercée sur les brides n'est pas trop importante. De plus, il faut bien noter que les brides 27 sont réalisées par une partie extrêmement solide et robuste de l'articulation, à savoir le corps 2 qui est obtenu de moulage. De plus, du fait de la position du contact entre la tige et le corps 2, il est facile de régler avec précision l'angle de débattement de la tige par rapport au boîtier.

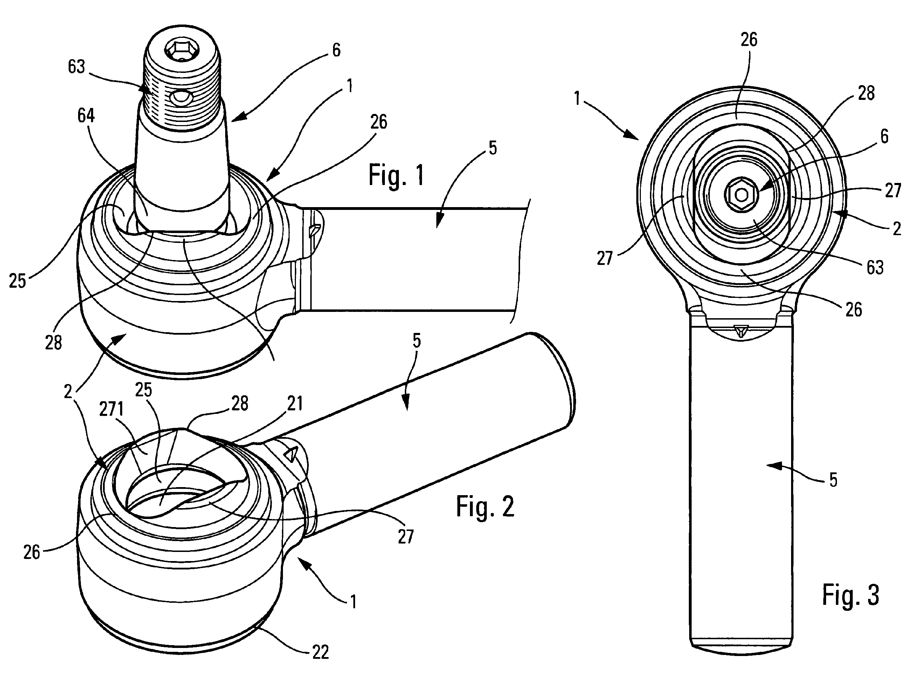

En se référant maintenant aux figures 1 à 3, on pourra aisément comprendre la configuration géométrique du bord de l'ouverture 25 et son action sur la tige de rotule 63. Sur la figure 3, on peut immédiatement observer que l'ouverture présente un bord ou crête d'appui 28 qui est de forme oblongue, ovale ou ellipsoïdale. On comprend alors aisément que la tige de rotule 63 pourra se déplacer avec un débattement important dans le sens du grand axe de l'ouverture oblongue. En revanche, dans le sens du petit axe, le débattement sera très fortement réduit, puisque limité uniquement à 1 °30'. On peut ainsi distinguer quatre parties de bord distinctes disposées par paires opposées, à savoir les parties de bord 26 situées sur le grand axe de la forme oblongue et les parties de bord 27 situées sur le petit axe de la forme oblongue. Les parties de bord 26, également visibles sur la figure 4, sont celles destinées à buter contre la tige 63 de la rotule. Quant aux parties de bord 27, visibles sur la figure 5, elles définissent les brides d'appui 27 destinées à venir en contact avec la partie cylindrique 64 de la tige de rotule 63. En se référant maintenant aux figures 1 et 2, on peut ainsi voir que le bord ou crête d'appui 28 de l'ouverture 25 présente une forme ovale, oblongue ou ellipsoïdale qui ne s'étend pas dans un plan, mais qui suit une trajectoire courbe avec des hauts et des bas. La trajectoire est basse au niveau des parties de bord 26 et haute au niveau des parties de bord 27. En faisant un tour complet du bord d'appui 28, son parcours monte deux fois et descend également deux fois. Cette trajectoire peut s'apparenter à une sorte de double sinusoïde en boucle. Dans ces parties de brides d'appui 27, le bord d'appui 28 présente une forme galbée qui se prolonge ensuite sans discontinuité dans les parties de bord 26. On peut également définir la position des brides d'appui 27 comme étant situées sur les côtés longs et droits de l'ouverture oblongue alors que les parties d'ouverture 26 sont situées sur les côtés courts ou courbes de l'ouverture oblongue.

La tige de rotule 63 peut ainsi se déplacer par pivotement principalement selon un seul axe étant donné que son débattement est limité selon l'axe perpendiculaire par les brides d'appui 27. On peut également dire que la tige 63 coulisse entre les deux brides d'appui 27 et vient en butée contre les parties de bord 26. Le coulissement entre les brides 27 se fait le long de la tige 63, et plus particulièrement au niveau de la partie cylindrique 64 de la tige. La butée se fait également sur la partie cylindrique 64. Toutefois, on peut également envisager que les bords d'ouverture 26 soient configurés de telle sorte qu'ils viennent en butée à l'intérieur du col 62.

On peut également remarquer que le bord d'appui 28 est rectiligne au niveau des brides d'appui 27, lorsque l'on regarde sous l'angle de la figure 3, tout en étant galbé, comme on peut le voir sur les figures 1 et 2.

Une telle articulation à rotule peut trouver une application privilégiée en tant que barre ou biellette de direction, barre d'accouplement ou biellette stabilisatrice.

Grâce à l'invention, on peut très facilement limiter le débattement de la rotule dans le boîtier sans compliquer la conception du boîtier ou de la rotule et sans réduire la solidité de l'articulation. Dans l'exemple qui a été utilisé pour illustrer la présente invention, le débattement a été limité à quelques degrés, cependant, il est également possible de mettre en oeuvre la présente invention pour réaliser les débattements limités plus importants, le principe étant de venir en appui non pas dans le col de la rotule mais sur la tige de rotule.

## Revendications

1. Articulation à rotule, notamment pour barre de direction ou d'accouplement, comprenant :
- un boîtier (1) formant un logement (21), une ouverture (25), un coussinet inférieur (24) et un coussinet supérieur (4),
- une rotule (6) formant une tête (61), un col (62) et une tige (63), le col (62) définissant un étranglement de section réduite entre la tête (61) et la tige (63), la tige s'étendant hors du boîtier (1) à travers son ouverture (25) définissant un bord d'appui (28), la tête (61) étant reçue dans le logement (21) entre les coussinets inférieur (24) et supérieur (4), de telle sorte que la tête peut se déplacer dans le logement,
**caractérisée en ce que** le boîtier (1) comprend, au niveau de son ouverture (25), au moins une bride d'appui (27) destinée à venir en contact de la tige de rotule (63) pour limiter son débattement dans cette direction, cette bride (27) se présentant sous la forme d'une extension d'une partie du bord d'appui (28) de l'ouverture (25) s'étendant en éloignement du logement de la tête de rotule.

2. Articulation à rotule selon la revendication 1, dans laquelle le boîtier (1) comprend deux brides opposées (27) disposées de part et d'autre de la tige (63) pour limiter le débattement de tige selon un axe.

3. Articulation à rotule selon la revendication 2, dans laquelle les brides (27) sont disposées de manière à limiter le débattement axial de la tige (63) à quelques degrés, avantageusement 1 à 3 degrés, et de préférence à environ 1°30'.

4. Articulation à rotule selon l'une quelconque des revendications précédentes, dans laquelle ladite au moins une bride (27) est hors de contact du col (62), lorsqu'elle est en contact de la tige (63).

5. Articulation à rotule selon l'une quelconque des revendications précédentes, dans laquelle la tige de rotule (63) comprend une section cylindrique (64), ladite au moins une bride (27) venant en contact de cette section cylindrique (64).

6. Articulation à rotule selon la revendication 5, dans laquelle la section cylindrique (64) se raccorde directement au col (62), et présente un diamètre supérieur à celui du col.

7. Articulation à rotule selon la revendication 5 ou 6, comprenant en outre un soufflet de cardan (7) fixé d'une part sur le boîtier (1) autour de l'ouverture (25) et en prise serrante d'autre part sur la partie cylindrique (64) de la tige de rotule (63).

8. Articulation à rotule selon l'une quelconque des revendications précédentes, dans laquelle ladite au moins une bride (27) définit une partie de bord de l'ouverture qui s'étend axialement davantage vers la tige de rotule (63) que d'autres parties de bord (26) de l'ouverture.

9. Articulation à rotule selon l'une quelconque des revendications précédentes, dans laquelle ladite au moins une bride (27) forme une partie de bord galbée de l'ouverture (25).

10. Articulation à rotule selon l'une quelconque des revendications précédentes, dans laquelle l'ouverture (25) présente une forme oblongue ou ovale, le bord d'appui (28) de ladite ouverture (25) étant de hauteur variable, les brides d'appui (27) étant situées sur les côtés longs de l'ouverture.

11. Articulation à rotule selon la revendication 2, dans laquelle les brides comprennent des faces d'appui internes (271) qui s'étendent sensiblement parallèlement l'une à l'autre.

## Claims

1. A ball joint, in particular for a steering bar or a track rod lever, the joint comprising:
a socket (1) forming a housing (21), an opening (25), a bottom bearing (24), and a top bearing (4); and
a ball (6) forming a head (61), a neck (62), and a rod (63), the neck (62) defining a constriction of reduced section between the head (61) and the rod (63), the rod projecting from the socket (1) through its opening (25) which defines an abutment edge (28), the head (61) being received in the housing (21) between the bottom and top bearings (24, 4), such that the head is capable of moving in the housing;
the ball joint being **characterized in that** the socket (1) includes, in its opening (25), at least one abutment limit (27) designed to come into contact with the rod (63) to limit its deflection **in that** direction, this limit (27) having the shape of an extension of a part of the abutment edge (28) of the opening (25) extending away from the housing of the ball joint.

2. A ball joint according to claim 1, wherein the socket (1) includes two opposite limits (27) disposed on either side of the rod (63) to limit the deflection of the rod along an axis.

3. A ball joint according to claim 2, wherein the limits (27) are disposed in such a manner as to limit the axial deflection of the rod (63) to a few degrees, advantageously in the range 1° to 3°, and preferably about 1°30'.

4. A ball joint according to any preceding claim, wherein said at least one limit (27) does not make contact with the neck (62) when it is in contact with the rod (63).

5. A ball joint according to any preceding claim, wherein the rod (63) has a cylindrical section (64), said at least one limit (27) coming into contact with said cylindrical section (64).

6. A ball joint according to claim 5, wherein the cylindrical section (64) is connected directly to the neck (62) and presents a diameter greater than the diameter of the neck.

7. A ball joint according to claim 5 or claim 6, further comprising a cardan bellows (7) both secured to the socket (1) around the opening (25) and also tightly engaged on the cylindrical portion (64) of the rod (63).

8. A ball joint according to any preceding claim, wherein said at least one limit (27) defines a portion of the edge of the opening that extends axially further towards the rod (63) than the other portions of the edge (26) of the opening.

9. A ball joint according to any preceding claim, wherein said at least one limit (27) forms a rounded edge portion of the opening (25).

10. A ball joint according to any preceding claim, wherein the opening (25) presents a shape that is oblong, or oval, the abutment edge (28) of said opening (25) being of varying height, the abutment limits (27) being situated on the long sides of the opening.

11. A ball joint according to claim 2, wherein the limits comprise inner abutment faces (271) that extend substantially parallel to each other.

## Patentansprüche

1. Kugelgelenk, insbesondere für die Lenk- oder Spurstange, aufweisend:
ein Gehäuse (1), das eine Aufnahme (21), eine Öffnung (25), ein unteres Lager (24) und ein oberes Lager (4) bildet,
einen Kugelanschluss (6), der einen Kopf (61), einen Hals (62) und einen Schaft (63) bildet,
wobei der Hals (62) eine Querschnittverminderung zwischen dem Kopf (61) und dem Schaft (63) definiert, wobei sich der Schaft außerhalb des Gehäuses (1) durch dessen Öffnung (25) erstreckt, die einen Auflagerand (28) definiert, wobei der Kopf (61) in der Aufnahme (21) zwischen dem unteren (24) und dem oberen (4) Lager derart aufgenommen ist, dass der Kopf in der Aufnahme beweglich ist,
**dadurch gekennzeichnet, dass** das Gehäuse (1) an seiner Öffnung (25) mindestens einen Auflageflansch (27) aufweist, um mit dem Kugelschaft (63) in Kontakt zu kommen, um dessen Ausschlag in dieser Richtung zu begrenzen, wobei dieser Flansch (27) in Form einer Verlängerung eines Teils des Auflagerands (28) der Öffnung (25) vorliegt, die sich von der Aufnahme des Kugelkopfes weg erstreckt.

2. Kugelgelenk nach Anspruch 1, wobei das Gehäuse (1) zwei entgegengesetzte Flansche (27) aufweist, die zu beiden Seiten des Schafts (63) angeordnet sind, um den Ausschlag des Schafts entlang einer Achse zu begrenzen.

3. Kugelgelenk nach Anspruch 2, wobei die Flansche (27) derart angeordnet sind, dass sie den axialen Ausschlag des Schafts (63) um einige Grad, vorteilhafterweise 1 bis 3 Grad, vorzugsweise etwa 1°30', begrenzen.

4. Kugelgelenk nach einem der vorhergehenden Ansprüche, wobei der mindestens eine Flansch (27) mit dem Hals (62) nicht in Kontakt ist, wenn er mit dem Schaft (63) in Kontakt ist.

5. Kugelgelenk nach einem der vorhergehenden Ansprüche, wobei der Kugelschaft (63) einen zylindrischen Abschnitt (64) aufweist, wobei der mindestens eine Flansch (27) mit diesem zylindrischen Abschnitt (64) in Kontakt kommt.

6. Kugelgelenk nach Anspruch 5, wobei sich der zylindrische Abschnitt (64) direkt an den Hals (62) anschließt und einen größeren Durchmesser aufweist als der Hals.

7. Kugelgelenk nach Anspruch 5 oder 6, des Weiteren aufweisend einen Kardanbalg (7), der einerseits um die Öffnung (25) auf dem Gehäuse (1) befestigt ist, und andererseits auf dem zylindrischen Teil (64) des Kugelschafts (63) in dichtem Eingriff ist.

8. Kugelgelenk nach einem der vorhergehenden Ansprüche, wobei der mindestens eine Flansch (27) einen Teil des Öffnungsrands bildet, der sich axial weiter zum Kugelschaft (63) erstreckt als andere Teile des Öffnungsrands (26).

9. Kugelgelenk nach einem der vorhergehenden Ansprüche, wobei der mindestens eine Flansch (27) einen Teil des gewölbten Rands der Öffnung (25) bildet.

10. Kugelgelenk nach einem der vorhergehenden Ansprüche, wobei die Öffnung (25) eine längliche oder ovale Form darstellt, wobei der Auflagerand (28) der Öffnung (25) eine variable Höhe aufweist, und wobei sich die Auflageflansche (27) auf den langen Seiten der Öffnung befinden.

11. Kugelgelenk nach Anspruch 2, wobei die Flansche innere Auflageflächen (271) aufweisen, die sich in etwa parallel zueinander erstrecken.
